**Europäisches Patentamt**

**European Patent Office**

**Office européen des brevets**

(11) Veröffentlichungsnummer: **0 026 942**
**B1**

(12) **EUROPÄISCHE PATENTSCHRIFT**

(45) Veröffentlichungstag der Patentschrift:
**23.11.83**

(21) Anmeldenummer: **80106135.9**

(22) Anmeldetag: **09.10.80**

(51) Int. Cl.³: **E 21 C 11/00,** B 23 Q 1/16

(54) **Bohrarm für Bohrmaschinen.**

(30) Priorität: **09.10.79 PL 218859**

(43) Veröffentlichungstag der Anmeldung:
**15.04.81 Patentblatt 81/15**

(45) Bekanntmachung des Hinweises auf die Patenterteilung:
**23.11.83 Patentblatt 83/47**

(84) Benannte Vertragsstaaten:
**CH DE FR GB LI SE**

(56) Entgegenhaltungen:
**DE - B - 1 062 650**
**DE - C - 809 785**
**DE - C - 864 984**
**FR - A - 1 033 622**
**FR - A - 2 146 584**
**FR - A - 2 414 617**
**US - A - 3 752 242**

(73) Patentinhaber: **Centrum Mechanizacji Gornictwa
"Komag", ul. Pszczynska 37, Gliwice (PL)**

(72) Erfinder: **Krol, Tadeusz, M. Sc. Mech. Eng., ul.
Perkoza 4/32, Gliwice (PL)**
Erfinder: **Mozdyniewicz, Jacek, M. Sc. Mech. Eng., ul.
Chrobrego 43/76, Katowice (PL)**
Erfinder: **Zawada, Zbigniew, M. Sc. Mech. Eng., ul.
Ligonia 38/8, Gliwice (PL)**

(74) Vertreter: **Füchsle, Klaus, Dipl.-Ing. et al, Hoffmann .
Eitle & Partner Patentanwälte Arabellastrasse 4,
D-8000 München 81 (DE)**

## Bohrarm für Bohrmaschinen

Die Erfindung betrifft einen Bohrarm für Bohrmaschinen zum Bohren von Spreng- und Ankerbohrlöchern in Strecken oder Abbauräumen des Bergbaus, mit einem Ausleger, an dessen Ende ein Kreuzgelenk angeordnet ist, mit dem indirekt die Betten von zwei nebeneinander angeordneten Bohrmaschinen verbunden sind.

Bohrarme sind aus Prospekten der Firmen Atlas Copco (Schweden), Ingersoll-Rand und Joy (USA), Tamrock (Finnland) und Salzgitter (BRD) bekannt. Die bekannten Bohrarme sind auf Mobilträgern aufgesetzt. Der Ausleger des Bohrarms ist an dem Träger gelenkartig befestigt, während am Ende des Auslegers ein Bett mit einer Führung für die Bohrmaschine angeordnet ist. Das Bett ist mit dem Ausleger über ein Kreuzgelenk verbunden, das eine Drehung des Bettes in der horizontalen und der vertikalen Ebene und somit dessen Einstellung in beliebiger Richtung zur Front des anstehenden Gesteins ermöglicht. Die Führung der Bohrmaschine ist verschiebbar auf das Bett aufgesetzt. Derzeit wird an einem Ausleger nur ein Bett mit der Führung der Bohreinheit montiert.

Beim Auffahren von Strecken oder Abbauräumen ist die Bohrzeit für die Löcher ein wesentlicher, über den Fortschritt der Arbeiten entscheidender Faktor. Jedoch ist der Einsatz von Mehrbohrarm-Bohranlagen in Strecken oder Abbauräumen durch die Abmessungen dieser Abbauräume beschränkt, und zwar mit Rücksicht auf die Aussenmasse sowohl der Mehrbohrarm-Bohranlagen, als auch der begleitenden Geräte. Aus diesem Grund werden zurzeit in Strecken und Abbauräumen höchstens Doppelbohrarm-Bohranlagen eingesetzt.

Aus der FR-PS 2 414 617 ist ein Bohrarm mit zwei nebeneinander angeordneten Bohrmaschinen bekannt, durch welchen ein gleichzeitiges Bohren von zwei Löchern vorgenommen werden kann. Dabei sind die beiden Bohrmaschinen im Verhältnis zueinander über drei Armpaare mit einer Zwischenführung verbunden, wodurch die beiden Bohrmaschinen in im wesentlichen horizontaler Ebene einerseits im Abstand zueinander parallel verschiebbar und anderseits winklig zu dem Führungsschlitten bewegbar sind. Auch kann über ein an einem seinerseits verschwenkbaren Ausleger vorgesehenes Kreuzgelenk der gesamte die beiden Bohrmaschinen enthaltende Bohrkopf um eine vertikale und um eine horizontale Achse verschwenkt werden.

Dieser bekannte Bohrarm ist sehr komplex aufgebaut. Um eine Änderung der Entfernung zwischen den Bohrlöchern herbeizuführen sowie eine Verschwenkbewegung des Bohrkopfes als Ganzes um die vertikale oder horizontale Achse vornehmen zu können, sind einerseits ein Kreuzgelenk und anderseits sehr aufwendig aufgebaute Betätigungsarme und Führungen für diese vorgesehen. Dieser komplizierte Aufbau sieht entsprechend aufwendige Wartungsarbeiten von unterschiedlichen Gelenken und Führungen sowie hohe Anschaffungskosten durch die hohe Bauteileanzahl und deren erforderliche hohe Genauigkeit nach sich. Wenn folglich mit Hilfe von zwei Bohrmaschinen in wirtschaftlich optimaler Weise lediglich im Abstand voneinander einstellbare Bohrlöcher erzeugt werden, so ist diese bekannte Einrichtung viel zu aufwendig.

Aufgabe der Erfindung ist es, ein Gerät der vorausgesetzten Art dahingehend weiterzubilden, dass es ein gleichzeitiges Bohren von zwei Löchern mit einstellbarem Achsabstand mit einem einzigen Bohrarm ermöglicht, wobei das Gerät einen besonders einfachen Aufbau aufweist, derart, dass eine besonders kompakte Bauweise bei hoher Wartungsfreundlichkeit gegeben sein soll. Des weiteren soll eine präzise Einstellmöglichkeit des Achsabstandes ermöglicht werden, ohne dass besondere zusätzliche Führungselemente, die eine hohe Bearbeitungsgenauigkeit benötigen, verwendet werden. Darüber hinaus soll das Gerät bei niederen Anschaffungskosten auch eine gute Austauschbarkeit seiner Elemente als auch eine Aufrüstbarkeit von bereits vorhandenen Bohrarmen mit einer Bohrmaschine mit zwei nebeneinanderliegenden Bohrmaschinen ermöglichen.

Diese Aufgabe wird durch die in den Ansprüchen gekennzeichnete Erfindung gelöst.

Das Wesen der Erfindung besteht darin, dass das am Ausleger vorgesehene Kreuzgelenk einen etwas komplexeren Aufbau erfahren hat. Und zwar ist an einen Kopf des Kreuzgelenks, nämlich am oberen Kopf, sowohl das Bett der einen Bohrmaschine befestigt als auch das Bett der zweiten Bohrmaschine verschwenkbar angelenkt, derart, dass die zweite Bohrmaschine gegenüber der ersten Bohrmaschine längs einer Kreisbahn verschwenkbar ist.

Gemäss einer besonderen Ausführungsform weist der obere Kopf des Kreuzgelenks dabei die Form eines rechtwinkligen Hebels mit einem Sitz für einen zur Achse des Auslegers senkrecht verlaufenden Zapfen auf, der diesen drehbar mit dem unteren Kopf verbindet. An einem Ende des ersten Arms des Hebels ist das erste Bett der einen Bohrmaschine starr befestigt, während der zweite Arm des Hebels die Form eines parallel zur Achse des Auslegers verlaufenden Zapfens besitzt, auf dem drehbar ein Arm aufgesetzt ist, an dessen Ende das zum ersten Bett parallele zweite Bett für die andere Bohrmaschine befestigt ist. Dabei sind die Betten mit einem querliegenden Betätigungszylinder zur Änderung der Stellung des zweiten Bettes gegenüber dem ersten Bett verbunden.

Hierdurch wird erreicht, dass lediglich durch die besondere, jedoch konstruktiv einfache Ausbildung eines Kopfes des Kreuzgelenks zwei achsparallel zueinander verschwenkbare Bohrmaschinen angeordnet werden können. Hiermit ist eine besonders kompakte Einheit geschaffen worden, mit einfachen Gelenkelementen, die eine hohe Wartungsfreundlichkeit, eine hohe und relativ gute Genauigkeit der Bewegung seiner Elemente und relativ niedrige Anschaffungskosten ermöglichen. Dabei besteht die Möglichkeit, bereits vorhandene Bohrarme, die lediglich eine Bohrmaschine aufweisen, auf einfache Weise mit zwei im Achsabstand zueinander einstellbare Bohrmaschinen auszurüsten. Hierzu muss lediglich beispielsweise der obere Kopf des Kreuzgelenks erfindungsgemäss ausgebildet werden, und die bereits vorhandenen, auf Betten und Führungen befestigten Bohrmaschinen an den beiden entsprechenden Armen des oberen Kopfes befestigt werden. Hieraus ergibt sich auch ein weiterer grosser Vorteil des Anmeldungsgegenstandes, und zwar dass die Betten mit aufgesetzter Führung und Bohrmaschine bereits mit dem Schwenkarm bzw. mit dem besonderen oberen Kopf ausgerüstet sind und auf Lager gehalten werden können. Bei Bedarf kann dann auf den mit einem unteren Kopf des Kreuzgelenks ausgerüsteten Ausleger entweder ein oberer Kopf mit einem einzigen Bett aufgesetzt werden oder es kann der erfindungsgemässe obere Kopf mit den beiden zusammengelenkten Betten angebracht werden. Des weiteren kann, bei Ausfall einer der beiden Bohrmaschinen oder eines Bett-Führungs-Bohrmaschinenkomplexes dieser Komplex einfach und schnell durch einen entsprechenden, auf Lager zu haltenden Komplex ersetzt werden.

Ein Ausführungsbeispiel des erfindungsgemässen Bohrarmes ist in den Zeichnungen dargestellt. Es zeigt:

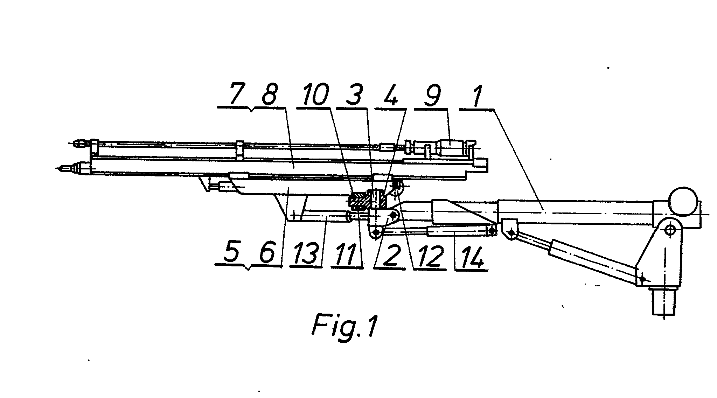

Fig. 1 eine Seitenansicht des Bohrarms,

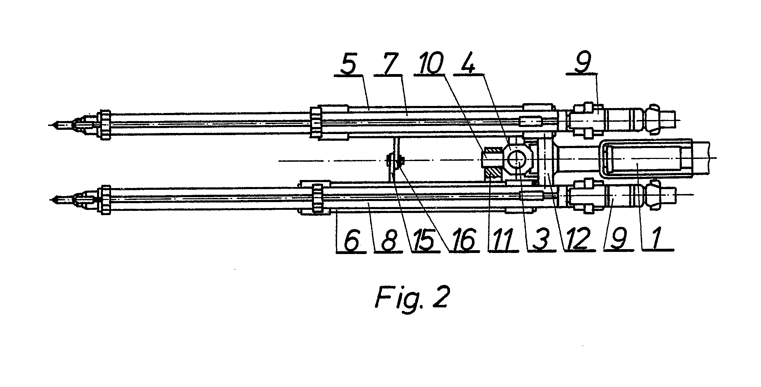

Fig. 2 die Draufsicht des Bohrarms, und

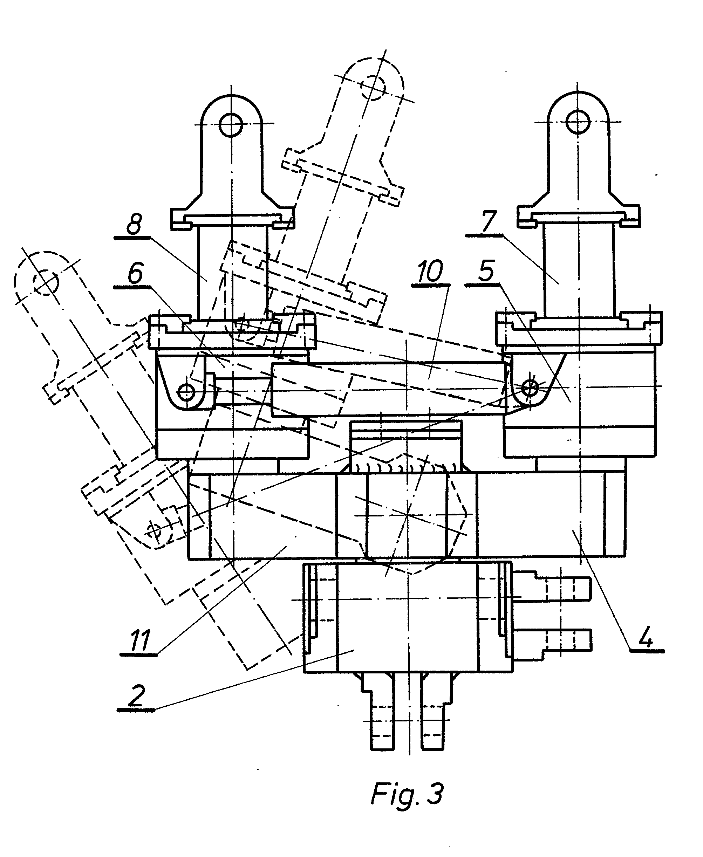

Fig. 3 die Frontansicht des Bohrarms von der Auslegerseite.

Am Ende eines Auslegers 1 des Bohrarms ist gelenkartig in der zur Sohle senkrechten und in der Auslegerachse liegenden Ebene der untere Kopf 2 eines an sich bekannten Kreuzgelenks 2, 4 befestigt. Der Kopf ist an einem Zapfen 3 angeformt, auf den drehbar der obere Kopf 4 des Kreuzgelenks 2, 4 aufgesetzt ist, der das Gestell für die Betten 5, 6 der Führungen 7, 8 der Bohrmaschinen 9 darstellt. Die Gelenkverbindung des unteren Kopfes 2 mit dem Ausleger 2 sowie die Gelenkverbindung des oberen Kopfes 4 mit dem unteren Kopf 2 bilden damit ein Kreuzgelenk 2, 4, das die Betten 5, 6 mit dem Ausleger 1 verbindet.

Der obere Kopf 4 wird durch einen rechtwinkligen Hebel gebildet, der an der Verbindungsstelle mit dem Zapfen 3 einen Sitz für diesen Zapfen 3 des Unterkopfes darstellt. Ein Arm des Kopfes 4 bildet einen Zapfen 10, während am Ende des anderen Arms starr bzw. steif und senkrecht das Bett 5 befestigt ist. Die Achse des Zapfens 10 verläuft damit parallel zum Bett 5. Auf dem Zapfen 10 ist drehbar ein Arm 11 aufgesetzt, an dessen Ende das zweite, zum Bett 5 parallele Bett 6 befestigt ist. Auf den Betten 5, 6 selbst sind verschiebbar die Führungen 7, 8 der Bohrmaschinen 9 aufgesetzt.

Die Betten 5, 6 sind untereinander durch einen querliegenden Betätigungszylinder 12 derart verbunden, dass bei einem Verlängern des Zylinders 12 der Arm 11 sich auf dem Zapfen 10 dreht und somit eine Kreisbewegung des Bettes 6 gegenüber dem Bett 5 stattfindet. Das Kreuzgelenk 2, 4 ist mit an sich bekannten Betätigungszylindern 13, 14 zur Änderung der Stellung des Gelenks gegenüber dem Ausleger 1 und zur Drehung des oberen Kopfes 4 gegenüber dem unteren Kopf 2 versehen. Vorteilhaft ist es, die Betten 5, 6 an beliebiger Stelle untereinander mit gelenkartig verbundenen Hebeln 15, 16 zu verbinden.

**Patentansprüche**

1. Bohrarm für Bohrmaschinen zum Bohren von Spreng- und Ankerbohrlöchern in Strecken oder Abbauräumen des Bergbaus, mit einem Ausleger, an dessen Ende ein Kreuzgelenk (2, 4) angeordnet ist, mit dem indirekt die Betten (5, 6) von zwei nebeneinander angeordneten Bohrmaschinen (9) verbunden sind, dadurch gekennzeichnet, dass das erste Bett (5) für die eine Bohrmaschine (9) starr mit dem einen Kopf (4) des Kreuzgelenks (2, 4) verbunden ist, und das zweite Bett (6) für die andere Bohrmaschine (9) mit dem gleichen Kopf (4) des Kreuzgelenks (2, 4) drehbar verbunden ist, derart, dass das Bett (6) gegenüber dem Bett (5) längs einer Kreisbahn beweglich ist.

2. Bohrarm nach Anspruch 1, dadurch gekennzeichnet, dass der mit den Betten (5, 6) verbundene Kopf, der obere Kopf (4) des Kreuzgelenks (2, 4) ist, der die Form eines rechtwinkligen Hebels mit einem Sitz für einen zur Achse des Auslegers (1) senkrecht verlaufenden Zapfen (3) aufweist, der diesen drehbar mit dem unteren Kopf (2) verbindet, an einem Ende des ersten Arms des Hebels das erste Bett (5) starr befestigt ist, während der zweite Arm des Hebels die Form eines parallel zur Achse des Auslegers (1) verlaufenden Zapfens (10) besitzt, auf dem drehbar ein Arm (11) aufgesetzt ist, an dessen Ende das zum ersten Bett (5) parallele zweite Bett (6) befestigt ist, und die Betten (5, 6) mit einem querliegenden Betätigungszylinder (12) zur Änderung der Stellung des zweiten Bettes (6) gegenüber dem ersten Bett (5) verbunden sind.

**Claims**

1. A drill arm for drilling machines for drilling holes for explosives and anchoring means in galleries or mineral-face chambers in mines and having a jib, at the end of which is arranged a knuckle joint (2, 4), to which are indirectly connected the beds (5, 6) of two juxtaposed drilling machines (9), characterized in that the first bed (5) for one drilling machine (9) is rigidly connected to one head (4) of the knuckle joint (2, 4), and the second bed (6) for the other drilling machine (9) is rotatably connected to the same head (4) of the knuckle joint (2, 4) in such manner that the bed (6) is movable relatively to the bed (5) along a circular path.

2. A drill arm according to Claim 1, characterized in that the head connected to the beds (5, 6) is the upper head (4) of the knuckle joint (2, 4), which head takes the form of a right-angled lever having a seat for a peg (3) which extends at right angles to the axis of the jib (1) and rotatably connects this lever to the lower head (2), the first bed (5) being rigidly secured to one end of the first arm of the lever, whereas the second arm of the lever takes the form of a peg (10) which extends parallel to the axis of the jib (1) and on which is rotatably mounted an arm (11), to the end of which is secured the second bed (6) parallel to the first bed (5), and the beds (5, 6) are connected to a transversely disposed actuating cylinder (12) for altering the position of the second bed (6) in relation to the first bed (5).

**Revendications**

1. Bras de forage pour machines de forage destinées à forer des trous de mine ou d'ancrage dans des galeries ou chambres d'abattage d'une mine, comprenant une flèche à l'extrémité de laquelle est agencée une articulation à axes croisés (2, 4) à laquelle sont réunis les berceaux (5, 6) de deux machines de forage (9) disposées l'une à côté de l'autre, caractérisé en ce que le premier berceau (5) prévu pour l'une des machines de forage (9) est relié solidairement à une tête (4) de l'articulation à axes croisés (2, 4) et le deuxième berceau (6) prévu pour l'autre machine de forage (9) est relié avec possibilité de rotation à la même tête (4) de l'articulation à axes croisés (2, 4) de telle manière que le berceau (6) puisse se déplacer par rapport au berceau (5) le long d'une trajectoire circulaire.

2. Bras de forage selon la revendication 1, caractérisé en ce que la tête qui est reliée aux berceaux (5, 6) est la tête supérieure (4) de l'articulation à axes croisés (2, 4), qui présente la forme d'un levier à angle droit muni d'une portée prévue pour un tourillon (3), s'étendant perpendiculairement à l'axe de la flèche (1), qui relie celle-ci avec possibilité de rotation à la tête inférieure (2), le premier berceau (5) est fixé solidairement à une extrémité du premier bras de levier tandis que le deuxième bras du levier possède la forme d'un tourillon (10) s'étendant parallèlement à l'axe de la flèche (1), sur lequel est monté rotatif un bras (11) dans l'extrémité duquel est fixé le deuxième berceau (6) parallèle au premier berceau (5) et les berceaux (5, 6) sont reliés à un vérin de manœuvre (12) disposé transversalement, qui sert à modifier la position du deuxième berceau (6) par rapport au premier berceau (5).

Fig.1

*Fig. 2*

*Fig. 3*